# EUROPÄISCHE PATENTSCHRIFT

(11) **EP 0 681 751 B1**
(45) Veröffentlichungstag und Bekanntmachung des Hinweises auf die Patenterteilung: **16.10.1996**
(21) Anmeldenummer: 94905654.3
(22) Anmeldetag: 25.01.1994
(51) Int. Cl.: H02B 1/21, H02B 1/36, H02B 11/133

(54) **GERÄTETRÄGER FÜR EINE NIEDERSPANNUNGS-SCHALTANLAGE**
DEVICE CARRIER FOR A LOW-VOLTAGE SWITCHING STATION
SUPPORTS D'APPAREILS POUR UNE INSTALLATION DE DISTRIBUTION ELECTRIQUE BASSE TENSION

(30) Priorität: 27.01.1993 DE 4302831; 21.04.1993 DE 4313661
(43) Veröffentlichungstag der Anmeldung: 15.11.1995
(73) Patentinhaber: SIEMENS AKTIENGESELLSCHAFT, 80333 München (DE)
(72) Erfinder: RÖSSLER, Karl-Heinz, D-63477 Maintal (DE); FEUERBACH, Manfred, D-60389 Frankfurt am Main (DE)
(86) Internationale Anmeldenummer: DE9400088
(87) Internationale Veröffentlichungsnummer: WO9417577

(56) Entgegenhaltungen:
- DE-A- 1 665 137
- DE-A- 1 690 343

## Beschreibung

Die Erfindung betrifft einen Geräteträger mit Haupttrennkontakten zur lösbaren Verbindung auf dem Geräteträger befindlicher Schaltgeräte mit Feldsammelschienen und mit durch die Schaltgeräte zu steuernden Verbrauchern, wobei die Trennkontakte aufnehmende Kontaktblöcke bei ruhendem Geräteträger mit zugehörigen, ortsfest angeordneten Gegenkontakten einer den Geräteträger aufnehmenden Niederspannungs-Schaltanlage durch eine frontseitig an der Niederspannungs-Schaltanlage zugängliche Hauptkontaktwelle quer zu einer zum Einsetzen des Geräteträgers in die Schaltanlage bzw. zur Entnahme daraus vorgesehenen Bewegungsrichtung verbindbar sind und wobei ferner ein gleichfalls vorgesehener, Hilfstrennkontakte aufnehmender Hifstrennkontaktblock quer zu der Bewegungsrichtung des Geräteträgers durch eine ebenfalls frontseitig an der Schaltanlage zugängliche Hilfskontaktwelle kontaktierbar ist.

Ein Geräteträger dieser Art ist durch die DE-Offenlegungsschrift 1 665 137 bekannt geworden. Die Hauptkontaktwelle und die Hilfskontaktwelle sind dabei in dem Gerüst der Schaltanlage jeweils in einem Fach angeordnet, das sich neben dem zur Aufnahme des Geräteträgers vorgesehenen Fach befindet. Die Wellen mit den darauf befindlichen Kontakten bilden somit Kontaktapparate nach der Art von Trennschaltern, die als feste Bestandteile der Schaltanlage ausgebildet ist. Der Erfindung liegt hiervon ausgehend die Aufgabe zugrunde, den Raumbedarf für die Trennkontaktanordnungen durch Vermeidung gesonderter Trennschalter zu verringern und zugleich die Möglichkeit zu schaffen, den Geräteträger bei Bedarf mit geringem Aufwand durch eine zuverlässige und robuste Stellungsanzeige zu ergänzen.

Diese Aufgabe wird gemäß der Erfindung dadurch gelöst, daß die Hauptkontaktwelle und die Hilfskontaktwelle an dem Geräteträger gelagert sind, und daß frontseitig am Geräteträger zugängliche Endstücke der Hauptkontaktwelle und der Hilfskontaktwelle konzentrisch zueinander angeordnet sind. Neben einer erheblichen Platzersparnis wird durch diese Anordnung auch erreicht, daß beide Wellen getrennt, aber auch gemeinsam betätigt werden können, womit alle Anforderungen an die Abhängigkeit zwischen der Bewegung der Haupttrennkontakte und der Hilfstrennkontakte erfüllt werden können. Da sich die beiden Wellen auf dem Geräteträger befinden und ihre Stellung die Stellung der Trennkontakte wiedergibt, läßt sich eine Anzeigevorrichtung mit einfachen Mitteln mechanisch zwangsläufig steuern.

Ein Geräteträger mit daran befindlicher Betätigungswelle für Haupttrennkontakte ist an sich durch die DE-Offenlegungsschrift 39 39 355 bekannt geworden. Jedoch ist dort nicht die Aufgabe behandelt, wie Hilfstrennkontakte betätigt werden können.

Es erweist sich als vorteilhaft, das Endstück der Hauptkontaktwelle innenliegend und das Endstück der Hilfskontaktwelle konzentrisch außenliegend anzuordnen, wobei jedes der Endstücke eine stirnseitig zugängliche Ausnehmung für den Eingriff eines Bartes eines Steuerschlüssels besitzt. Diese Anordnung gestattet es insbesondere, einen Geräteträger in einer Grundausführung nur mit der Hauptkontaktwelle auszurüsten. Wird auch eine Hilfskontaktwelle gewünscht, so wird diese als Rohr oder Hohlwelle über die Hauptkontaktwelle geschoben. In diesem Zusammenhang wirkt es sich für die Bedienbarkeit der beiden Wellen günstig aus, wenn das Endstück der Hauptkontaktwelle gegenüber dem Endstück der Hilfskontaktwelle axial zurückgesetzt und die Ausnehmung des Endstückes der Hauptkontaktwelle sowie die Ausnehmung des Endstückes der Hilfskontaktwelle so angeordnet sind, daß in der Trennstellung des Geräteträgers die Ausnehmungen miteinander axial fluchten. Auf diese Weise ist durch unterschiedlich tiefes Einstecken eines Werkzeuges oder eine unterschiedliche Bemessung des Werkzeuges zu erreichen, daß ausgehend von der Trennstellung nur die eine oder die andere der beiden Wellen oder beide Wellen gemeinsam betätigt werden.

Um eine angemessene Sicherheit bei der Bedienung einer Schaltanlage zu erreichen, können gesonderte Steuerschlüssel zur Herbeiführung einer Prüfstellung bzw. einer Betriebsstellung des Geräteträgers vorgesehen sein, wobei der Steuerschlüssel für die Prüfstellung einen axial kürzeren Bart zur alleinigen Betätigung der Hilfskontaktwelle und der Steuerschlüssel für die Betriebsstellung einen axial längeren Bart zur gleichzeitigen Betätigung der Hilfskontaktwelle und der Hauptkontaktwelle besitzt. Daher ist mittels des einen Steuerschlüssels nur der Hilfskontaktblock betätigbar, um die Funktionsfähigkeit eines Geräteträgers prüfen zu können. Der andere Steuerschlüssel dagegen erlaubt es, alle Vorgänge durchzuführen, um einen Verbraucher in Betrieb oder außer Betrieb zu setzen. Sollte in Einzelfall eine abgestufte Berechtigung zur Bedienung einer Schaltanlage nicht erforderlich sein, so können zur leichteren Handhabung beide Steuerschlüssel durch ein etwa mittiges Griffstück zu einem Doppelschlüssel verbunden sein.

Wie schon erwähnt, kann die Hilfskontaktwelle unabhängig von der Hauptkontaktwelle betätigt werden. Dabei kann aber aus Gründen der Sicherheit eine Beschränkung der an sich möglichen Anzahl von Kombinationen von Stellungen der beiden Wellen gefordert werden. Insbesondere soll ausgehend von der Betriebsstellung eine Öffnung nur der Hilfstrennkontakte ausgeschlossen sein, weil dies zu einer unkontrollierten und daher möglicherweise gefahrbringenden Stillsetzung und Wiedereinschaltung der Verbraucher führen würde. Zu fordern ist daher eine zwangsläufige Öffnung sowohl der Hilfstrennkontakte als auch der Haupttrennkontakte. Eine vorteilhafte Möglichkeit einer entsprechenden Verriegelung besteht darin, daß die Hauptkontaktwelle und die Hilfskontaktwelle durch eine Leerlaufkupplung derart verbunden sind, daß ausgehend von der Betriebsstellung bei Verwendung des Steuerschlüssels für die Prüfstellung nur beide Wellen gemeinsam unter Öffnung sowohl der Haupttrennkontakte als auch der Hilfstrennkontakte betätigbar sind, wobei die Leerlaufkupplung eine zusätzliche bogenförmige Ausnehmung der Hilfskontaktwelle und einen in die bogenförmige Ausnehmung der eintauchenden Mitnehmerzapfen der Hauptkontaktwelle umfaßt.

Um Schäden an den Kontakten des Geräteträgers zu vermeiden, ist es erforderlich, daß die vorgesehenen Kontaktbewegungen stets vollständig ausgeführt werden. Dies kann zweckmäßig in ähnlicher Weise erreicht werden, wie dies bei Schlössern üblich ist, und zwar dadurch, daß vor den Endstücken der Hauptkontaktwelle und der Hilfskontaktwelle eine den Durchtritt der Bärte der Steuerschlüssel nur in den Endstellungen der beiden Wellen gestattendes Schlüsselloch angeordnet ist.

Eine wichtige Eigenschaft der Bauart von Geräteträgern, wie sie der Erfindung zugrunde liegt, besteht darin, daß der Geräteträger bei geschlossenen Haupttrennkontakten ohne zusätzliche Verriegelungsmittel gegen Herausziehen aus dem Einschubfach gesperrt ist. Es kann jedoch erwünscht sein, daß auch eine vor dem Geräteträger angeordnete Tür nur in der Trennstellung des Geräteträgers geöffnet werden kann. Dies ist dadurch zu erreichen, daß die Hilfskontaktwelle einen Sperrkragen zur Verriegelung einer für den Zugang zu dem Geräteträger vorgesehenen Tür trägt.

Für den Benutzer einer Schaltanlage ist es insbesondere beim Vorhandensein einer größeren Anzahl von einschiebbaren Geräteträgern wesentlich, den Betriebszustand der Geräteträger leicht erkennen zu können. Es erweist sich hierbei, daß die vorgesehene konzentrische Anordnung der Endstücke der Hauptkontaktwelle und der Hilfskontaktwelle eine überraschend einfache Möglichkeit für eine zuverlässige Stellungsanzeige bietet. Dies kann nach einer Weiterbildung der Erfindung dadurch geschehen, daß die Hauptkontaktwelle und die Hilfskontaktwelle an ihrem Umfang je eine Aussparung besitzen, wobei in der Trennstellung des Geräteträgers beide Aussparungen korrespondieren, und daß ein quer zur Längsachse beider Wellen verschiebbar geführter Schieber einen in die Aussparungen eintauchenden Steuernocken besitzt, derart, daß der Schieber entgegen einer Rückstellkraft durch Drehung der Hauptkontaktwelle und/oder der Hilfskontaktwelle in eine eindeutige Anzeigestellung bewegbar ist.

Die Erfindung wird im folgenden anhand des in den Figuren dargestellten Ausführungsbeispieles näher erläutert.

Die Figur 1 zeigt in vereinfachter perspektivischer Darstellung ein Feld einer Niederspannungs-Schaltanlage.

In der Figur 2 ist in der Draufsicht gleichfalls schematisch vereinfacht ein Geräteträger mit angrenzenden Teilen der Schaltanlage gemäß der Figur 1 dargestellt.

Die Figuren 3 und 3A zeigen Antriebsteile für einen Haupttrennkontaktblock des Geräteträgers gemäß der Figur 2 in der Betriebs- bzw. der Trennstellung.

In der Figur 4 sind eine Hauptkontaktwelle und eine Hilfskontaktwelle mit geschnitten gezeigten Endstücken dargestellt. Die Figuren 5 und 6 sind Schnitte A-A bzw. B-B im Bereich der Endstücke gemäß der Figur 4.

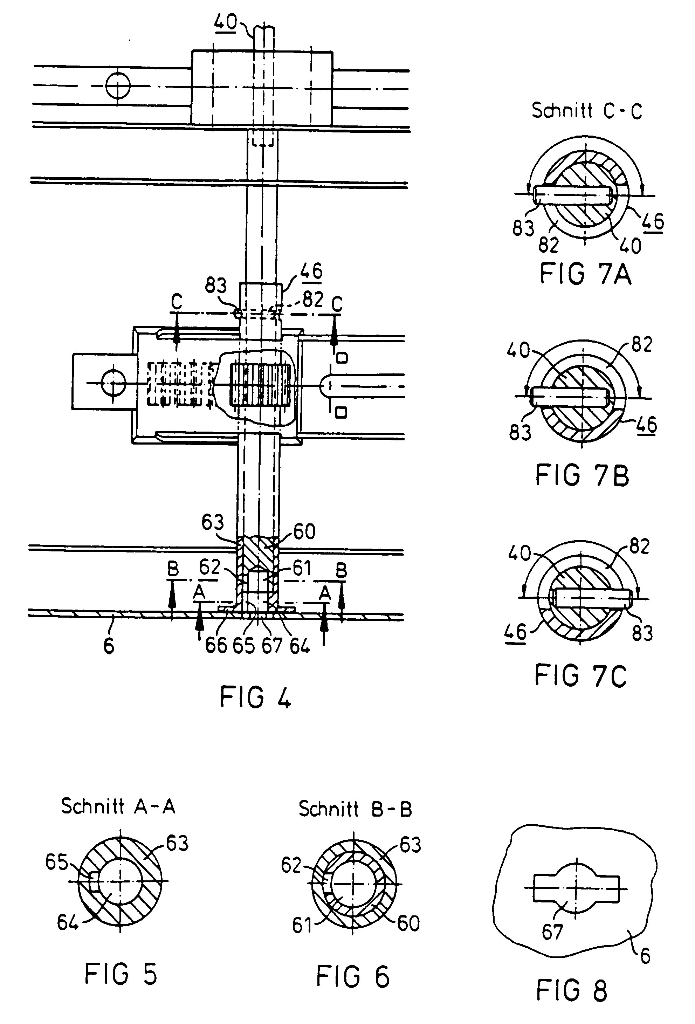

Einen weiteren Schnitt C-C in Figur 4 zeigen die Figuren 7A, 7B und 7C bei unterschiedlicher relativer Stellung der Hauptkontaktwelle und der Hilfskontaktwelle.

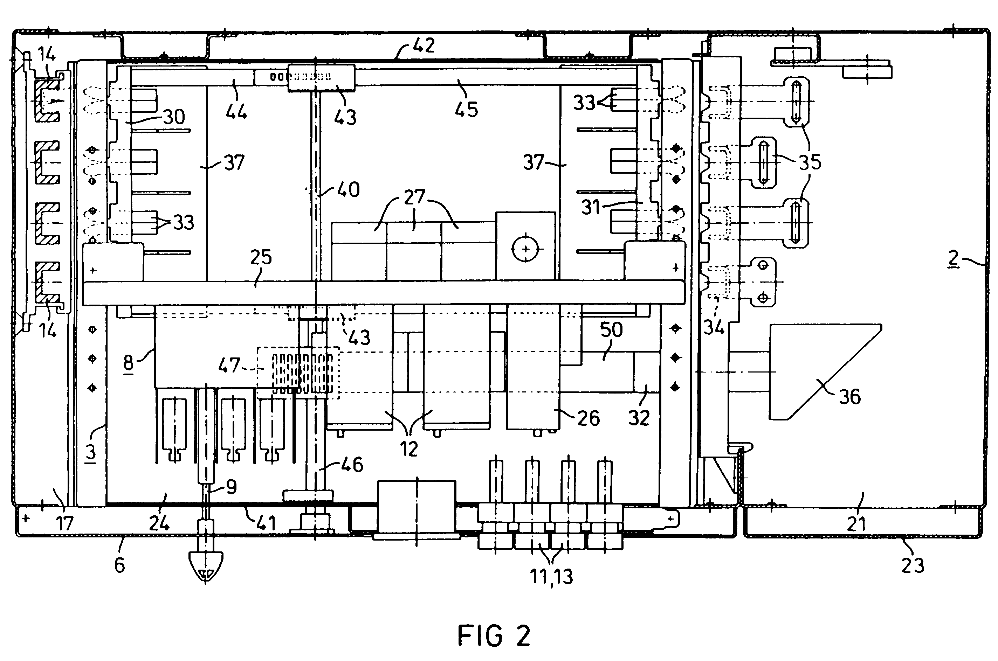

Die Kontur eines Schlüsselloches an der Frontseite des Geräteträgers gemäß der Figur 2 zeigt die Figur 8.

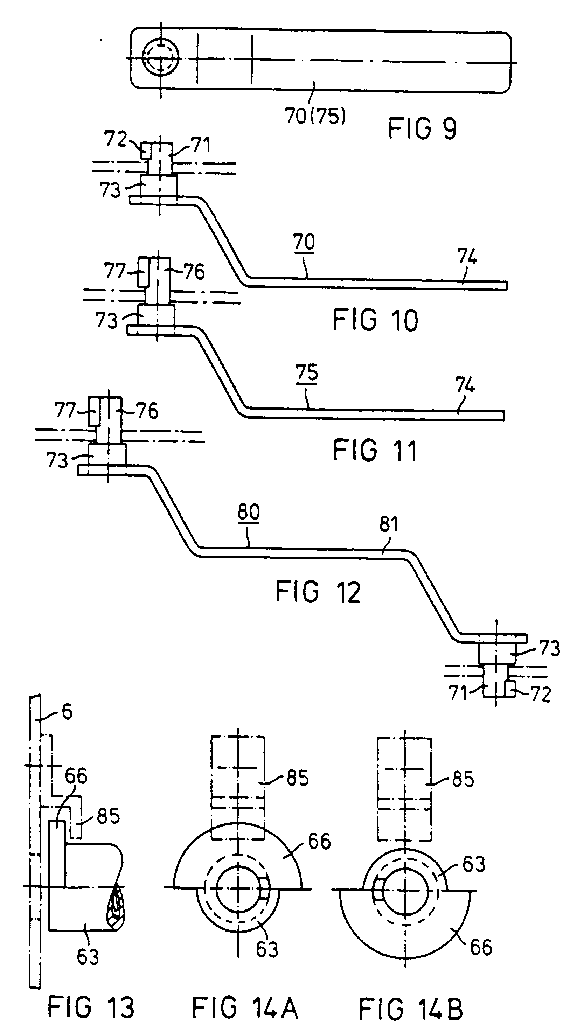

Die Figur 9 zeigt einen Steuerschlüssel in der Draufsicht.

Die Figur 10 ist eine Seitenansicht des Steuerschlüssels gemäß der Figur 9 in der Ausführung für die Prüfstellung.

Die Figur 11 ist eine der Figur 10 entsprechende Darstellung einer Ausführung für die Betriebsstellung.

In der Figur 12 ist gleichfalls in einer Seitenansicht ein kombinierter Steuerschlüssel für Prüf- und Betriebsstellung gezeigt.

Die Figur 13 zeigt in einer Seitenansicht einen an der Hilfskontaktwelle angebrachten Sperrkragen zusammen mit angedeuteten Teilen einer Tür.

Die Figuren 14A und 14B zeigen die Anordnung gemäß der Figur 13 in einer Frontansicht in zwei verschiedenen Stellungen.

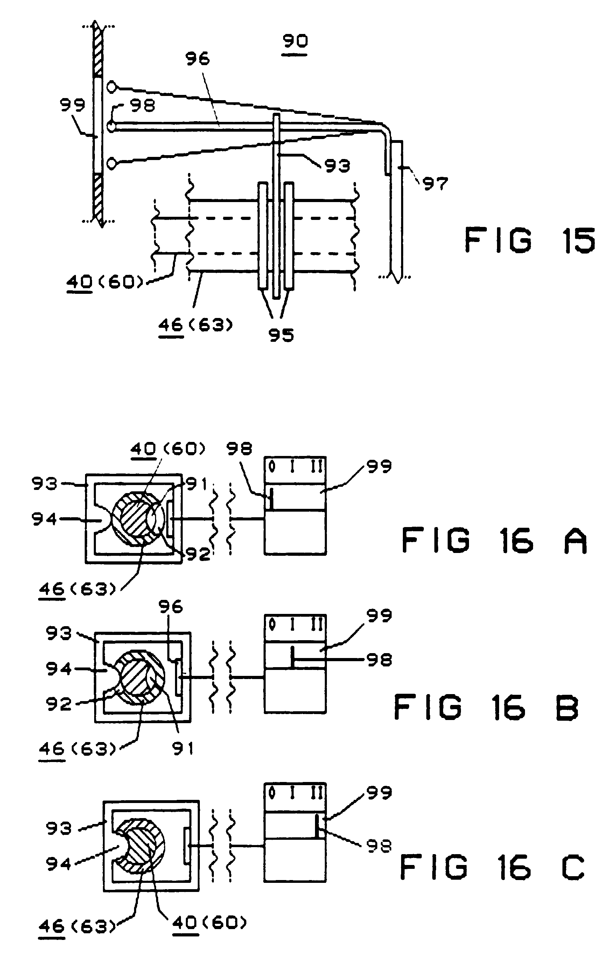

In der Figur 15 ist ein Teil eines Geräteträgers gemäß der Figur 2 mit einer Vorrichtung zur Anzeige der Stellung des Geräteträgers in einer Seitenansicht gezeigt.

Die Figuren 16A, 16B und 16C zeigen eine Baugruppe der Vorrichtung gemäß der Figur 15 in der Trennstellung, der Prüfstellung und der Betriebsstellung.

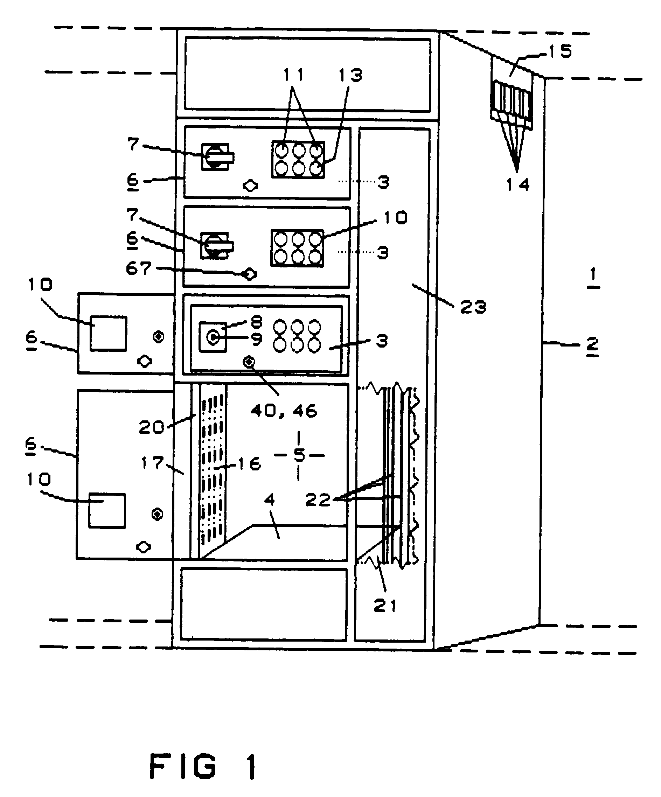

In der Figur 1 ist eine Niederspannungs-Schaltanlage 1 anhand eines einzelnen Feldes 2 veranschaulicht. Durch gestrichelte Linien ist angedeutet, daß sich gleiche oder ähnliche Felder nach links oder rechts oder nach beiden Seiten anschließen können. Wie schon einleitend erwähnt, dient eine Schaltanlage dieser Art zur Steuerung mehrerer Verbraucher, wobei allein das gezeigte Feld 2 der Schaltanlage 1 mit mehreren noch zu erläuternden Geräteträgern für eine entsprechende Anzahl von Verbrauchern bestückt ist.

Bei den erwähnten Verbrauchern kann es sich beispielsweise um Motorantriebe von beliebigen industriellen Anlagen handeln. Folgende grundsätzliche Funktionen werden dabei bereitgestellt: Ein- und Ausschalten des Verbrauchers von Hand mittels Druckknopfsteuerung an der Schaltanlage, zusätzlich auch ferngesteuert am Ort des Motorantriebes und, falls vorhanden, auch durch eine zentrale Schaltwarte, die in einer umfangreichen industriellen Anlage vorgesehen sein kann. Es ist üblich, für diese Aufgabe ein elektromagnetisch betätigtes Schütz - oder falls wechselnde Drehrichtung gefordert ist, eine Wendeschütz-Kombination - zu verwenden. Ein elektrisch in Reihe mit dem Schütz bzw. den Schützen geschalteter Hauptschalter gestattet die Unterbrechung des Stromkreises unabhängig von der Schaltstellung oder Funktion des Schützes bzw. der Schütze. Hauptschalter und Schütze werden im folgenden auch zusammenfassend als Schaltgeräte bezeichnet.

Bei der Schaltanlage 1 gemäß der Figur 1 sind die genannten Schaltgeräte auf jeweils einem Geräteträger 3 (Figur 2) angeordnet. Das Feld 2 der Schaltanlage 1 ist zur Aufnahme von vier Geräteträgern 3 eingerichtet und ist hierzu durch Fachböden 4 in eine entsprechende Anzahl von Einschubfächern 5 unterteilt, die durch jeweils eine Tür 6 verschließbar sind. Jede der Türen 6 weist einen Drehgriff 7 zur Bedienung eines Hauptschalters 8 (Fig. 2) der erwähnten Art auf. Beim Schließen der Tür 6 treten geeignete Kupplungsteile an der Innenseite der Tür und an einer Schalterwelle 9 (Fig. 2) miteinander derart in Eingriff, daß der Hauptschalter 8 bei geschlossener Tür 6 bedienbar ist. Ferner besitzt jede der Türen 6 ein Bedienungsfenster 10, durch das Drucktaster 11 zur Bedienung eines Schützes 12 (Fig. 2) und Anzeigeleuchten 13 zur Darstellung des jeweiligen Schaltzustandes zugänglich bzw. sichtbar sind. In der Figur 1 sind zwei Einschubfächer 5 mit geschlossener Tür 6, ein Einschubfach 5 mit eingesetztem Geräteträger 3 und geöffneter Tür 6 sowie ein weiteres Einschubfach 3 ohne eingesetzten Geräteträger und mit geöffneter Tür 6 gezeigt.

Die vorstehend erwähnten Schaltgeräte gehören zu dem Laststromkreis eines Verbrauchers. Dieser Laststromkreis wird aus Sammelschienen 14 gespeist, die sich über die gesamte Länge der Schaltanlage 1 erstrecken. Das Feld 2 besitzt zur Aufnahme der Sammelschienen 14 im oberen Bereich einen Sammelschienenraum 15, der z. B. entsprechend der DE-A-40 05 069 gestaltet sein kann. In nicht näher dargestellter Weise sind mit den horizontalen Sammelschienen 14 angeordnete Feldsammelschienen 16 verbunden, die sich in einem Einspeisungsschacht 17 befinden, der sich an der linken Seite des Feldes 2 im wesentlichen über dessen gesamte Höhe erstreckt. In dem unteren Einschubfach 3 sind die Feldsammelschienen 16 und ein die Feldsammelschienen 16 aufnehmender Isolierträger 20 erkennbar. Auf der dem Einspeisungsschacht 17 gegenüberliegenden, d. h. der rechten Seite weist das Feld 2 einen sich gleichfalls im wesentlichen über die gesamte Höhe des Feldes 2 erstreckenden Abgangsschacht 21 auf, der zur Unterbringung aller zu den Verbrauchern führenden Kabel und Leitungen dient. In einem an das untere leere Einschubfach 3 angrenzenden, aufgebrochen dargestellten Bereich des Feldes 2 sind in der Figur 1 derartige Kabel und Leitungen bei 22 angedeutet.

Im folgenden wird der Aufbau eines der Geräteträger 3 anhand der Figur 2 näher erläutert. Die Figur 2 zeigt den Geräteträger in der Draufsicht in einem horizontalen Schnitt durch das in der Figur 1 gezeigte Feld einer Schaltanlage. In der Figur 2 sind zunächst die bereits bei der Beschreibung der Figur 1 erwähnten Hauptteile des Feldes 2 ersichtlich, nämlich der links befindliche Einspeisungsschacht 17 mit U-förmigen Sammelschienen 14 und auf der rechten Seite der Abgangsschacht 21 für abgehende Kabel und Leitungen. Die Tür 6 für das Einschubfach 5 ist im geschlossenen Zustand gezeigt. Der Abgangsschacht 21 ist ebenfalls mit einer verschlossen gezeigten Tür oder Abdeckung 23 versehen.

Der Geräteträger 3 weist eine Grundplatte 24 auf, auf der eine parallel zur Vorderkante verlaufende und senkrecht stehende Zwischenwand 25 angeordnet ist. Auf der Vorderseite und der Rückseite der Zwischenwand 25 sind Schaltgeräte angeordnet. Erkennbar sind insbesondere der bereits erwähnte Hauptschalter 8 mit der Schalterwelle 9 sowie zwei Schütze 12, ferner ein Überstromrelais 26 und mehrere auf der Rückseite der Zwischenwand 25 angeordnete Hilfsschütze 27.

Der Geräteträger 3 verfügt über insgesamt drei bewegbar angeordnete Trennkontaktblöcke, und zwar im hinteren linken Teil einen bewegbaren Trennkontaktblock 30 für die Einspeisung, auf der rechten hinteren Seite einen Trennkontaktblock 31 für die Abgänge sowie im vorderen rechten Teil einen Trennkontaktblock 32 für Hilfsstromkreise. Wie in der Figur 2 angedeutet ist, weist der linke Trennkontaktblock 30 für jede der Feldsammelschienen 14 zwei mit außenliegenden Kontaktflächen versehene Kontakthebel 33 auf. Gleiche Kontakthebel 33 besitzt der rechte Trennkontaktblock 31 zum Eingreifen in U-förmige Abgangskontaktstücke 34, die mit je einer Klemmlasche 35 versehen sind. Einzelheiten des Trennkontaktblockes 32 für die Hilfsstromkreise sind nicht gezeigt. Es kann sich um eine geeignete Vielfachsteckverbindung handeln, die nach Anzahl der Kontaktstellen und Güte der Kontaktflächen den vorliegenden Aufgaben angepaßt ist. Das ortsfeste Gegenstück für den Hilfstrennkontaktblock 32 bildet ein Klemmenblock 36, der ebenso wie die Abgangsklemmlaschen 35 in den Abgangsschacht 21 hineinragt.

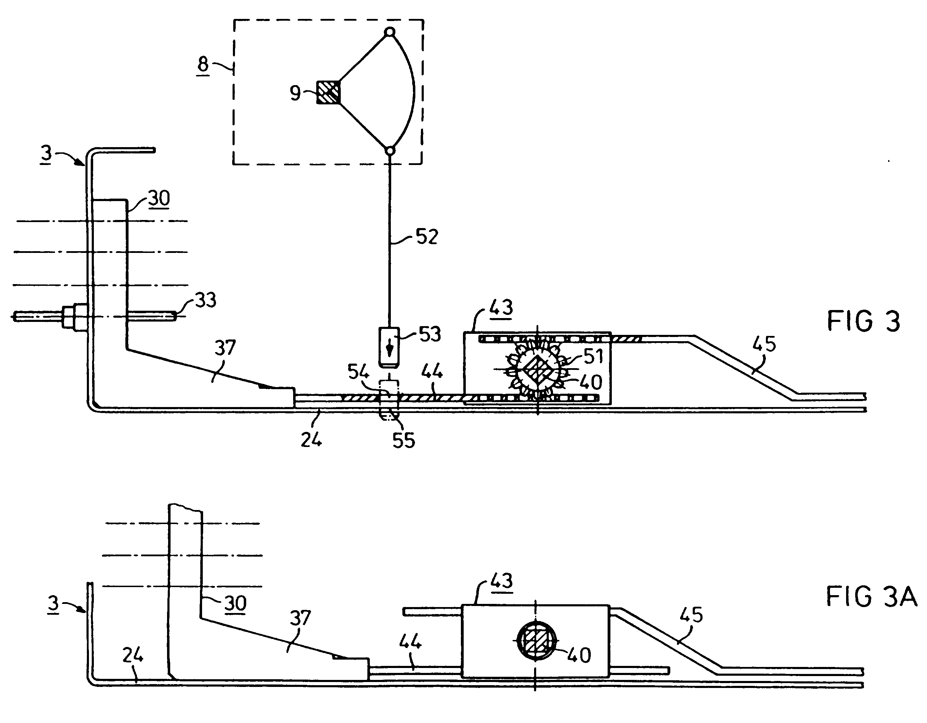

Der Trennkontaktblock 30 für die Eingangsseite und der Trennkontaktblock 31 für die Abgangsseite sind auf je einem Schlitten 37 montiert, wobei die Schlitten 37 gegenläufig und gleichzeitig verschiebbar sind. Hierzu ist eine Hauptkontaktwelle 40 vorgesehen, die in einer Frontplatte 41 des Geräteträger 3 und zusätzlich an einer weiteren Stelle, beispielsweise in einer Rückwand 42 des Geräteträgers 3 gelagert ist. Die Hauptkontaktwelle 40 wirkt mit zwei Antriebsblöcken 43 zusammen, von denen die eine in der Figur 2 nur teilweise sichtbar ist. Die Antriebsblöcke 43 dienen zur gegenläufigen Betätigung von zahnstangenartigen Treibstangen 44 und 45, die paarweise an den Haupttrennkonaktblöcken 30 und 31 angreifen, um diese verkantungsfrei zu verschieben. Eine Hilfskontaktwelle 46 ist als Hohlwelle ausgebildet und umgibt konzentrisch den vorderen Teil der Hauptkontaktwelle 40. Die Hilfskontaktwelle 46 wirkt mit einem weiteren Antriebsblock 47 zusammen, der mittels einer weiteren Zahnstange 50 den Hilfstrennkontaktblock 32 betätigt. Einzelheiten der Hauptkontaktwelle 40, der Hilfskontaktwelle 46 sowie der Antriebsblöcke 43 und 47 werden im folgenden anhand der Figur 3 und 3A erläutert.

Die Figur 3 zeigt einen Teil des Geräteträgers 3 ohne die in der Figur 2 gezeigten elektrischen Geräte, so daß nur die im Zusammenhang mit dem linken Trennkontaktblock 30 in Verbindung stehenden Teile erkennbar sind. Wie die Figur 3 zeigt, ist der Trennkontaktblock 30 auf der Grundplatte 24 des Geräteträgers 3 verschiebbar geführt. Zur Vereinfachung ist der Haupttrennkontaktblock 30 in einer Ausführung mit nur einem Haupttrennkontakt 33 dargestellt. Der Antriebsblock 43 ist geöffnet gezeigt, wobei erkennbar ist, daß die Hauptkontaktwelle 40 als Vierkantwelle mit quadratischen Querschnitt ausgebildet ist und ein Zahnrad 51 durchsetzt. Ferner ist gezeigt, daß die weitere Treibstange 45 auf der der Treibstange 44 gegenüberliegenden Seite des Zahnrades 51 in das Zahnrad 51 eingreift und hierdurch bei einer Drehung der Hauptkontaktwelle 40 eine gegenläufige Bewegung der Treibstangen 44 und 45 zustandekommt. Dies ist anhand eines Vergleiches mit der Figur 3A näher ersichtlich, welche die Trennstellung zeigt, in der der Trennkontaktblock 30 zum Inneren des Geräteträgers 3 hin verschoben gezeigt ist. Dementsprechend ragen die Treibstangen 44 und 45 auf gegenüberliegenden Seiten des hier geschlossen dargestellten Antriebsblockes 43 aus diesem heraus.

Anhand der Figur 3 ist noch ersichtlich, daß die Treibstangen 44 und/oder 45 in vorteilhaft einfacher Weise zu einer Verriegelung gegenüber dem gestrichelt angedeuteten Hauptschalter 8 benutzt werden können. Hierzu ist mit der Schalterwelle 9 des Hauptschalters 8 ein Hebelgestänge 52 verbunden, an dem sich ein Riegelstift 53 befindet. In der Ausschaltstellung des Hauptschalters 8 befindet sich der Riegelstift 53 in der ausgezogen gezeigten Stellung oberhalb der Treibstange 44. Wird der Hauptschalter 8 eingeschaltet, so gelangt der Riegelstift 53 in die strichpunktiert gezeigte Stellung in der Figur 3, in der er eine passende Riegelöffnung 54 in der Treibstange 44 durchsetzt und in eine weitere fluchtende Öffnung 55 in der Grundplatte 24 des Geräteträgers 3 eingreift. Es ist daher nicht möglich, den Trennkontaktblock 30 zu verschieben, wenn der Hauptschalter 8 eingeschaltet ist. Andererseits ist es nicht möglich, den Hauptschalter 8 einzuschalten, wenn nicht zuvor der Trennkontaktblock 30 in die Betriebsstellung gemäß der Figur 3 gebracht worden ist.

Die Betätigung des Trennkontaktblockes 32 für die Hilfsstromkreise und die Abhängigkeit von den Trennkontaktblöcken 30 und 31 wird nachtragend anhand der Figuren 4 bis 8 erläutert.

In der Figur 4 ist nur der Bereich des Geräteträgers 3 gezeigt, der die Hauptkontaktwelle 40 und die Hilfskontaktwelle 46 enthält. Diese Wellen überdeckende Geräte sind fortgelassen.

Die Hauptkontaktwelle 40 besitzt ein einstückig ausgebildetes oder in geeigneter Weise gekuppeltes Endstück 60 mit einer zentralen Bohrung 61 sowie mit einer sich über die verbleibende Wandstärke erstreckenden Ausnehmung 62. Ein außenliegend konzentrisch zu dem Endstück 60 angeordnetes Endstück 63 der Hilfskontaktwelle 46 besitzt eine mit der zentralen Bohrung 61 des Endstückes 60 fluchtende und daher von der Stirnseite des Geräteträgers 3 her zugängliche, gleichfalls zentrale Bohrung 64. Ferner ist eine von der zentralen Bohrung 64 ausgehende und stirnseitig zugängliche Ausnehmung 65 vorgesehen, die in der Stellung der Hauptkontaktwelle 40 und der Hilfskontaktwelle 46 gemäß der Figur 4 mit der Ausnehmung 62 fluchtet. Wie die Figur 4 ferner zeigt, liegt das Endstück 63 der Hilfskontaktwelle 46 mit einem frontseitigen Sperrkragen 66 unmittelbar an der geschlossenen Tür 6 des Einschubfaches an. Der Zweck des Sperrkragens 66 wird noch gesondert erläutert.

In der Figur 4 ist noch gezeigt, daß die Tür 6 im geschlossenen Zustand unmittelbar am stirnseitigen Ende der Hilfskontaktwelle anliegt. In der Tür 6 ist ein Schlüsselloch 67 für Steuerschlüssel angebracht, die anhand der Figuren 9, 10, 11 und 12 noch erläutert werden. Die Form des Schlüsselloches 67 ist näher der Figur 8 zu entnehmen.

Zunächst wird auf die Bedienung der Hauptkontaktwelle 40 und der Hilfskontaktwelle 46 mittels in den Figuren 9, 10, 11 und 12 dargestellter Steuerschlüssel eingegangen. Bei gleicher Grundform entsprechend der Figur 9 unterscheiden sich ein Steuerschlüssel 70 für die Prüfstellung gemäß der Figur 10 und ein Steuerschlüssel 75 für die Betriebsstellung gemäß der Figur 11 durch ihre Bärte. Um die Bezugnahme zu vereinfachen, wird der Steuerschlüssel 70 (Figur 10) im folgenden als Prüfschlüssel, der Steuerschlüssel 75 (Figur 11) im folgenden als Betriebsschlüssel bezeichnet.

Gemeinsame Merkmale des Prüfschlüssels 70 und des Betriebsschlüssels 75 sind ein abgekröpftes Griffstück 74 und ein Zapfenteil 73, das an einem Ende des Griffstückes 74 befestigt ist. Als weitere Merkmale besitzt der Prüfschlüssel 70 einen sich in der axialen Verlängerung des Zapfenteiles 73 erstreckenden zylindrischen Zapfen 71 und eine hiervon radial abragenden Bart 72. Der Zapfenteil 73 kann einen größeren Durchmesser als der Zapfen 71 besitzen und damit den axialen Eingriff des Prüfschlüssels 70 bezüglich der Tür 6, die in den Figuren 10 und 11 angedeutet ist begrenzen.

Die Anordnung und die axiale Länge des Bartes 72 sind so gewählt, daß der Prüfschlüssel 70 nur in die Ausnehmung 65 (Figur 4) einzugreifen vermag und demzufolge auch nur die Hilfskontaktwelle 46 betätigt werden kann. Auf diese Weise können die Geräte des Geräteträgers 3 probeweise eingeschaltet und es können Funktionen geprüft werden, ohne zugleich auch die Verbraucher ein- und auszuschalten.

Der Betriebsschlüssel 75 gemäß der Figur 11 unterscheidet sich gegenüber dem vorstehend erläuterten Prüfschlüssel 70 durch einen axial längeren Bart 77. Mittels des Bartes 77 erfaßt der Betriebsschlüssel nicht nur die Ausnehmung 65 der Hilfskontaktwelle 46, sondern auch die Ausnehmung 62 der Hauptkontaktwelle 40. Bei der Benutzung des Betriebs 75 werden daher beide Wellen gleichzeitig betätigt. Dies führt dazu, daß an die Geräteanordnung die zum Betrieb der Schütze und der Anzeigeleuchten erforderliche Hilfsspannung angelegt und die einspeisenden Haupttrennkontakte geschlossen werden. Somit können alle betriebsmäßigen Schaltvorgänge vorgenommen werden.

Falls eine gesonderte Berechtigung zum Prüfen und für den Betrieb einer industriellen Anlage nicht vorgesehen ist, können der Prüfschlüssel 70 und der Betriebsschlüssel 75 zu einem einstückigen Steuerschlüssel 80 zusammengefaßt sein, wie ihn die Figur 12 zeigt. Hierbei befinden sich die Bärte 72 und 77 an gegenüberliegenden Enden eines doppelt abgekröpften Griffstückes 81.

Eine aus den Figuren 4 sowie 7A, 7B und 7C näher ersichtliche Leerlaufkupplung zwischen der Hauptkontaktwelle 40 und der Hilfskontaktwelle 46 sorgt dafür, daß eine unzulässige Betätigungsfolge der beiden Wellen unterbleibt. Die Leerlaufkupplung umfaßt eine bogenförmige, d. h. sich über einen Teil des Umfanges der Hilfskontaktwelle 46 erstreckende Ausnehmung 82 (Figur 4) sowie einen in die Ausnehmung 82 eintauchenden Mitnehmerzapfen 83, der in die Hauptkontaktwelle 40 eingesetzt ist. Drei charakteristische Stellungen zeigen die Figuren 7A, 7B und 7C. In der Figur 7A ist die Trennstellung gezeigt. Ausgehend von dieser ist entweder nur die Hilfskontaktwelle 46 mit dem Prüfschlüssel 70 im Uhrzeigersinn in die Prüfstellung drehbar (Fig. 7B) oder die Hauptkontaktwelle 40 und die Hilfskontaktwelle 46 können gemeinsam mit dem Betriebsschlüssel 75 in die Betriebsstellung gedreht werden (Fig. 7C). Wurden nur die Hilfstrennkontakte eingeschaltet, so befinden sich die stirnseitigen Aufnehmungen von Haupt- und Hilfskontaktwelle in Opposition und es kann nur der Prüfschlüssel eingesetzt werden und es ist nur das Zurückdrehen in die Trennstellung möglich. Dies ist insofern wichtig, als dadurch alle evtl. bei der Prüfung entstandenen elektrischen Schaltzustände, z. B. Verriegelungen und Selbsthaltungen mit Sicherheit und ohne zusätzlichen Aufwand in den Ausgangs-Schaltzustand zurückgeführt werden. Wurden dagegen die Haupt- und Hilfstrennkontakte eingeschaltet, befindet sich der Geräteträger also in Betriebsstellung, so werden infolge der Kupplung sowohl mit dem Betriebsschlüssel als auch mit dem Prüfschlüssel Haupt- und Hilfstrennkontakte in die Trennstellung gedreht.

Bei der Beschreibung der Figur 4 wurde das Schlüsselloch 67 erwähnt. Dieses ist in der Figur 8 in einer Frontansicht gezeigt. Wie zu erkennen ist, gestattet es die Form des Schlüsselloches 67, den Prüfschlüssel 70 bzw. den Betriebsschlüssel 75 nur in zwei um 180° versetzten Positionen einzustecken bzw. abzunehmen. Dies bedeutet, daß die Bedienungsvorgänge stets vollständig ausgeführt werden müssen, um den jeweils benutzten Steuerschlüssel wieder abnehmen zu können. Das Schlüsselloch 67 kann auch so ausgebildet sein, daß von 180° abweichende Drehwinkel der Steuerschlüssel erzielt werden.

Bei der Erläuterung der Figur 4 wurde der stirnseitige Sperrkragen 66 an dem Endstück 63 der Hilfskontaktwelle 46 erwähnt. Wie näher den Figuren 13 sowie 14A und 14B zu entnehmen ist, erstreckt sich der Sperrkragen 66 etwa über den halben Umfang des Endstückes 63 und wirkt mit einem strichpunktierten gezeigten Sperrstück 85 zusammen, das an der Innenseite der Tür 6 angebracht ist. In der Prüfstellung und in der Betriebsstellung des Geräteträgers 3 greift der Sperrkragen 66 gemäß den Figuren 13 und 14A hinter das Sperrstück 85. Die Figur 14B zeigt das Endstück 63 in der Trennstellung, in welche der Sperrkragen 66 außer Eingriff mit dem Sperrstück 85 steht, so daß die Tür 6 geöffnet werden kann.

Die konzentrische Anordnung des Endstückes 60 der Hauptkontaktwelle 40 und des Endstückes 63 der Hilfskontaktwelle 46 bildet auch die Grundlage für eine Anzeigevorrichtung 90, die sich durch einen überraschend einfachen Aufbau und eine zuverlässige Wirkungsweise auszeichnet. Der Aufbau der Anzeigevorrichtung 90 wird im folgenden anhand der Figuren 15 sowie 16A, 16B und 16C erläutert. Die Anzeigevorrichtung 90 dient zur Anzeige der drei möglichen Schaltstellungen des Einschubträgers 3, nämlich der Trennstellung, der Test- oder Prüfstellung und der Betriebsstellung.

Zunächst wird der grundsätzliche Aufbau der Anzeigevorrichtung 90 beschrieben. In den Figuren 15, 16A, 16B und 16C sind konzentrische Abschnitte der Hauptkontaktwelle 40 und der Hilfskontaktwelle 46 gezeigt. Es kann sich auch um die konzentrischen Endstücke 60 und 63 der genannten Wellen handeln, wie mittels der entsprechenden Bezugszeichen in den genannten Figuren angedeutet ist. Die Anzeigevorrichtung 90 umfaßt eine in radialer Richtung abgerundet gestalte Ausnehmung 91 der Hauptkontaktwelle 40 bzw. des zugehörigen Endstückes 60 und eine Ausnehmung 92 der Hilfskontaktwelle 46 bzw. des zugehörigen Endstückes 63. Wie insbesondere die Figuren 16A und 16C zeigen, ist die Ausnehmung 92 so geformt, daß sie in eine bündige Stellung zu der Ausnehmung 91 gebracht werden kann, in der sie stufenlos in diese übergeht.

Ein Schieber 93 übergreift rahmenartig die Wellen 40 und 46 bzw. deren Endstücke 60 und 63 und besitzt einen abgerundeten Steuernocken 94, dessen Krümmungsradius kleiner als der Krümmungsradius der Vertiefung ist, die bei bündiger Stellung der Ausnehmungen 91 und 92 entsprechend den Figuren 16A und 16C gebildet wird. Dadurch kann der Steuernocken 94 bei einer Drehung der Wellen 40 und/oder 46 in radialer Richtung aus den Ausnehmungen 91 und/oder 92 verdrängt werden. Vor der Erläuterung der Vorgänge beim Übergang von einer Schaltstellung zu einer anderen wird zunächst der weitere Aufbau der Anzeigevorrichtung 90 beschrieben.

Der Schieber 93 ist gemäß der Figur 15 zwischen zwei scheibenartigen Ansätzen oder Rippen 95 der Hilfskontaktwelle 46 bzw. des zugehörigen Endstückes 63 quer zur Längsachse der Wellen 40 und 46 verschiebbar geführt und wird von einer federnden Speiche 96 durchsetzt, die aus Federblech oder Federdraht besteht und die an ihrem einen Ende in einem Widerlager 97 fest eingespannt ist. An ihrem freien Ende bildet die Speiche 96 einen Zeiger 98, der z. B. durch das gebogene Ende oder durch ein gesondertes Organ gebildet sein kann. Der Zeiger 98 ist in einem Fenster 99 sichtbar, neben dem die Schaltstellungen des Geräteträgers 3 mit Symbolen oder Worten markiert sind. In den Figuren 16A, 16B und 16C sind zur Vereinfachung die Trennstellung mit 0, die Test- oder Prüfstellung mit I und die Betriebsstellung mit II gekennzeichnet. Wie die Figur 15 noch zeigt, wird eine Bewegung des Schiebers 93 dadurch auf einen größeren Ausschlag des Zeigers 98 übersetzt, daß der Schieber 93 in einer gewissen Entfernung von dem Zeiger 98 an der Speiche 96 angreift. Bei unveränderter Länge der Speiche 96 und bei ebenfalls unveränderter Tiefe der Ausnehmungen 91 und 92 besteht daher die vorteilhafte Möglichkeit, durch eine axial verschiebbare Anordnung des Schiebers 93 relativ zur Längsachse der Wellen 40 und 46 einen größeren oder kleineren Weg des Zeigers 98 zwischen den verschiedenen Schaltstellungen zu erzielen. Erforderlich ist lediglich, daß die Ausnehmungen 91 und 92 eine entsprechende axiale Erstreckung besitzen und die Rippen 95 axial verschiebbar sind.

Die verschiedenen Stellungen des Zeigers 98 kommen folgendermaßen zustande:
In der Figur 16A liegt der Steuernocken 94 am Umfang der Hilfskontaktwelle 46 bzw. des zugehörigen Endstückes 63 an, weil sich die Ausnehmungen 91 und 92 in bündiger Stellung auf der diametral gegenüberliegenden Seite des Steuernockens 94 befinden. Dies entspricht der am weitesten nach links verschobenen Stellung des Schiebers 93, die der Trennstellung "0" zugeordnet ist. Durch Drehung der Hilfskontaktwelle 46 bzw. des zugehörigen Endstückes 63 gelangt die Ausnehmung 92 in den Bereich des Steuernockens 94, wie dies die Figur 16B zeigt. Durch eine entsprechende Biegung der Speiche 96 wird nun der Zeiger 98 aus der Stellung "0" in die Stellung "I" für die Test- oder Prüfstellung überführt. Eine weitere Bewegung des Schiebers 93 wird durch eine Drehung der Hauptkontaktwelle 40 bzw. des zugehörigen Endstückes 60 bewirkt, da nun der Steuernocken 94 auch in die Ausnehmung 91 eintreten kann und damit seine am weitesten nach rechts verschobene Stellung erreicht. Der Zeiger 98 steht nun auf dem Symbol "II" für die Betriebsstellung.

Offensichtlich sind bei unverändertem Prinzip abgewandelte Ausführungen der Anzeigevorrichtung möglich. Insbesondere kann der Schieber anstelle einer rahmenartigen beispielsweise eine bolzenförmige Gestalt aufweisen und kann an einem gesonderten Führungsteil gehalten sein. Ferner können die Kennzeichnungen der Schaltstellungen an einer Anzeigetafel angebracht sein, die anstelle des Zeigers 98 an der Speiche 96 befestigt ist und die in einem Fenster sichtbar sind. Eine weitere Abwandlung betrifft die Speiche 96, die starr ausgebildet, um ein Schwenklager bewegbar und durch eine gesonderte Feder vorgespannt sein kann.

## Patentansprüche

1. Geräteträger (3) mit Haupttrennkontakten (33) zur lösbaren Verbindung auf dem Geräteträger (3) befindlicher Schaltgeräte (8, 12, 26, 27) mit Feldsammelschienen (16) und mit durch die Schaltgeräte (8, 12, 26, 27) zu steuernden Verbrauchern, wobei die Haupttrennkontakte (33) aufnehmende Kontaktblöcke (30, 31) bei ruhendem Geräteträger (3) mit zugehörigen, ortsfest angeordneten Gegenkontakten (16, 34) einer den Geräteträger (3) aufnehmenden Niederspannungs-Schaltanlage (1) durch eine frontseitig an der Schaltanlage (1) zugängliche Hauptkontaktwelle (40) quer zu einer zum Einsetzen des Geräteträgers (3) in die Schaltanlage (1) bzw. zur Entnahme daraus vorgesehenen Bewegungsrichtung (9) verbindbar sind und wobei ferner ein gleichfalls vorgesehener, Hilfstrennkontakte aufnehmender Hilfstrennkontaktblock (32) quer zu der Bewegungsrichtung (9) des Geräteträgers (3) und durch eine ebenfalls frontseitig an der Niederspannungs-Schaltanlage zugängliche Hilfskontaktwelle (46) kontaktierbar ist,
**dadurch gekennzeichnet,** daß die Hauptkontaktwelle (40) und die Hilfskontaktwelle (46) an dem Geräteträger (3) gelagert sind und daß frontseitig am Geräteträger (3) zugängliche Endstücke (60, 63) der Hauptkontaktwelle (40) und der Hilfskontaktwelle (46) konzentrisch zueinander angeordnet sind.

2. Geräteträger nach Anspruch 1,
**dadurch gekennzeichnet,** daß das Endstück (60) der Hauptkontaktwelle (40) innenliegend und das Endstück (63) der Hilfskontaktwelle (46) konzentrisch außenliegend angeordnet ist und daß jedes der Endstücke (60, 63) eine stirnseitig zugängliche Ausnehmung (62, 65) für den Eingriff eines Bartes (72, 77) eines Steuerschlüssels (70; 75; 80) besitzt.

3. Geräteträger nach Anspruch 2,
**dadurch gekennzeichnet,** daß das Endstück (60) der Hauptkontaktwelle (40) gegenüber dem Endstück (63) der Hilfskontaktwelle (46) axial zurückgesetzt und die Ausnehmung (62) des Endstückes (60) der Hauptkontaktwelle (40) sowie die Ausnehmung (65) des Endstückes (63) der Hifskontaktwelle (46) so angeordnet sind, daß in der Trennstellung des Geräteträgers (3) die Ausnehmungen (62, 65) miteinander axial fluchten.

4. Geräteträger nach Anspruch 3,
**dadurch gekennzeichnet,** daß gesonderte Steuerschlüssel (70; 75) zur Herbeiführung einer Prüfstellung bzw. einer Betriebsstellung des Geräteträgers (3) vorgesehen sind, wobei der Steuerschlüssel (70) für die Prüfstellung einen axial kürzeren Bart (72) zur alleinigen Betätigung der Hilfskontaktwelle (46) und der Steuerschlüssel (75) für die Betriebsstellung einen axial längeren Bart (77) zur gleichzeitigen Betätigung der Hilfskontaktwelle (46) und der Hauptkontaktwelle (40) besitzt.

5. Geräteträger nach Anspruch 4,
**dadurch gekennzeichnet,** daß beide Steuerschlüssel durch ein etwa mittiges Griffstück (81) zu einem Doppelschlüssel (80) verbunden sind.

6. Geräteträger nach einem der vorangehenden Ansprüche,
**dadurch gekennzeichnet,** daß die Hauptkontaktwelle (40) und die Hilfskontaktwelle (46) durch eine Leerlaufkupplung derart verbunden sind, daß ausgehend von der Betriebsstellung bei Verwendung des Steuerschlüssels (70) für die Prüfstellung nur beiden Wellen (40, 46) gemeinsam unter Verschiebung sowohl der Haupttrennkontaktblöcke (30, 31) als auch des Hilfstrennkontaktblockes (32) in die Öffnungsstellung betätigbar sind, wobei die Leerlaufkupplung eine zusätzliche bogenförmige Ausnehmung (82) der Hilfskontaktwelle (46) und einen in die bogenförmige Ausnehmung (82) eintauchenden Mitnehmerzapfen (83) der Hauptkontaktwelle (40) umfaßt.

7. Geräteträger nach einem der vorangehenden Ansprüche,
**dadurch gekennzeichnet,** daß vor den Endstücken (60, 63) der Hauptkontaktwelle (40) und der Hilfskontaktwelle (46) eine den Durchtritt der Bärte (72, 77) der Steuerschlüssel (70; 75; 80) nur in den Endstellungen der beiden Wellen (40, 46) gestattendes Schlüsselloch (67) angeordnet ist.

8. Geräteträger nach einem der vorangehenden Ansprüche,
**dadurch gekennzeichnet,** daß die Hilfskontaktwelle (46) einen Sperrkragen (66) zur Verriegelung einer für den Zugang zu dem Geräteträger (3) vorgesehenen Tür (6) trägt.

9. Geräteträger nach einem der vorangehenden Ansprüche,
**dadurch gekennzeichnet,** daß die Hauptkontaktwelle (40) und die Hilfskontaktwelle (46) an ihrem Umfang je eine Aussparung (91, 92) besitzen, wobei in der Trennstellung des Geräteträgers (3) beide Aussparungen (91, 92) korrespondieren, und daß ein quer zur Längsachse beider Wellen (40, 44) verschiebbar geführter Schieber (93) einen in die Aussparungen (91, 92) eintauchenden Steuernocken (94) besitzt, derart, daß der Schieber (93) entgegen einer Rückstellkraft durch Drehung der Hauptkontaktwelle (40) und/oder der Hilfskontaktwelle (46) in eine eindeutige Anzeigestellung (0, I, II) bewegbar ist.

## Claims

1. Equipment mounting (3) having main isolating contacts (33) for detachable connection of switching devices (8, 12, 26, 27), which are located on the equipment mounting (3), to panel busbars (16), and having loads which can be controlled by the switching devices (8, 12, 26, 27), it being possible to connect contact blocks (30, 31), which accommodate the main isolating contacts (33), when the equipment mounting (3) is stationary to associated mating contacts (16, 34), which are arranged in a fixed position, on a low-voltage switching installation (1), which accommodates the equipment mounting (3), by means of a main contact shaft (40) which is accessible from the front on the switching installation (1), transversely with respect to a movement direction (9) which is intended for insertion of the equipment mounting (3) into the switching installation (1) or for removal from it, and, furthermore, it being possible to make contact with an auxiliary isolating contact block (32), which is likewise provided and accommodates auxiliary isolating contacts, transversely with respect to the movement direction (9) of the equipment mounting (3) and by means of an auxiliary contact shaft (46) which is likewise accessible from the front on the low-voltage switching installation, characterized in that the main contact shaft (40) and the auxiliary contact shaft (46) are mounted on the equipment mounting (3), and in that end pieces (60, 63), which are accessible from the front on the equipment mounting (3), of the main contact shaft (40) and of the auxiliary contact shaft (46) are arranged concentrically with respect to one another.

2. Equipment mounting according to Claim 1, characterized in that the end piece (60) of the main contact shaft (40) is arranged such that it is located internally, and the end piece (63) of the auxiliary contact shaft (46) is arranged such that it is located concentrically externally, and in that each of the end pieces (60, 63) has a recess (62, 65), which is accessible from the end, for the engagement of a bit (72, 77) of a control key (70; 75; 80).

3. Equipment mounting according to Claim 2, characterized in that the end piece (60) of the main contact shaft (40) is set back axially with respect to the end piece (63) of the auxiliary contact shaft (46), and the recess (62) in the end piece (60) of the main contact shaft (40) as well as the recess (65) in the end piece (63) of the auxiliary contact shaft (46) are arranged such that the recesses (62, 65) are axially flush with one another when the equipment mounting (3) is in the disconnected position.

4. Equipment mounting according to Claim 3, characterized in that separate control keys (70; 75) are provided in order to bring about a test position and an operating position, respectively, of the equipment mounting (3), the control key (70) for the test position having an axially shorter bit (72) in order to operate just the auxiliary contact shaft (46), and the control key (75) for the operating position having an axially longer bit (77) in order to operate the auxiliary contact shaft (46) and the main contact shaft (40) simultaneously.

5. Equipment mounting according to Claim 4, characterized in that both control keys are connected by means of an approximately central grip (81) to form a double-ended key (80).

6. Equipment mounting according to one of the preceding claims, characterized in that the main contact shaft (40) and the auxiliary contact shaft (46) are connected by means of a slip coupling in such a manner that, starting from the operating position when using the control key (70) for the test position, it is possible to operate only both shafts (40, 46) jointly, moving both the main isolating contact blocks (30, 31) and the auxiliary isolating contact block (32) into the open position, the slip coupling comprising an additional recess (82), in the form of an arc, in the auxiliary contact shaft (46) and a driver pin (83) on the main contact shaft (40), which driver pin (83) engages in the recess (82) which is in the form of an arc.

7. Equipment mounting according to one of the preceding claims, characterized in that a keyhole (67), which allows the bite (72, 77) of the control keys (70; 75; 80) to pass through only in the limit positions of the two shafts (40, 46), is arranged in front of the end pieces (60, 63) of the main contact shaft (40) and of the auxiliary contact shaft (46).

8. Equipment mounting according to one of the preceding claims, characterized in that the auxiliary contact shaft (46) is fitted with a locking collar (66) for locking a door (6) which is provided for access to the equipment mounting (3).

9. Equipment mounting according to one of the preceding claims, characterized in that the main contact shaft (40) and the auxiliary contact shaft (46) each have a cut out (91, 92) on their circumference, both cut outs (91, 92) corresponding when the mounting rack (3) is in the disconnected position, and in that a slide (93) which is guided such that it can move transversely with respect to the longitudinal axis of both shafts (40, 44) has a control stud (94), which engages in the cut outs (91, 92), in such a manner that the slide (93) can move against a restoring force into an unambiguous indication position (0, I, II) by rotation of the main contact shaft (40) and/or of the auxiliary contact shaft (46).

## Revendications

1. Support (3) d'appareils comportant des contacts (33) de sectionnement principaux pour la liaison amovible d'appareils (8,12,26,27) de coupure se trouvant sur le support (3) d'appareils et comportant des rails (16) collecteurs de champ et des appareils consommateurs d'énergie à commander par les appareils (8,12,26,27) de coupure, des blocs (30,31) de contact recevant les contacts (33) de sectionnement principaux pouvant être reliés, lorsque le support (3) d'appareils est au repos, à des contacts antagonistes (16,34) disposés à demeure et associés d'une installation (1) de coupure basse tension recevant le support (3) d'appareils par un arbre (40) de contact principal accessible du côté frontal de l'installation (1) de coupure transversalement à une direction (9) de mouvement prévue pour insérer le support (3) d'appareils dans l'installation (1) de coupure ou pour l'en enlever et un bloc (32) de contacts de sectionnement auxiliaires prévu de la même manière et recevant des contacts de sectionnement auxiliaires peut être mis en contact, transversalement à la direction (9) de mouvement du support (3) d'appareils par un arbre (46) de contact auxiliaire accessible également du côté frontal de l'installation de coupure basse tension,
caractérisé en ce que l'arbre (40) de contact principal et l'arbre (46) de contact auxiliaire sont logés dans le support (3) d'appareils et des pièces (60,63) d'extrémité, accessibles du côté frontal du support (3) d'appareils, de l'arbre (40) de contact principal et de l'arbre (46) de contact auxiliaire sont montés en étant concentriques l'un par rapport à l'autre.

2. Support d'appareils suivant la revendication 1,
caractérisé en ce que la pièce (60) d'extrémité de l'arbre (40) de contact principal est disposée à l'intérieur et la pièce d'extrémité (63) de l'arbre (46) de contact auxiliaire est montée à l'extérieur, les deux pièces étant concentriques, et chacune des pièces (60,63) d'extrémité a un évidement (62,65) accessible du côté frontal pour l'engagement d'un panneton (72,77) d'une clé (70;75;80) de commande.

3. Support d'appareils suivant la revendication 2,
caractérisé en ce que la pièce (60) d'extrémité de l'arbre (40) de contact principal est en retrait suivant l'axe par rapport à la pièce (63) d'extrémité de l'arbre (46) de contact auxiliaire et l'évidement (62) de la pièce (60) d'extrémité de l'arbre (40) de contact principal ainsi que l'évidement (65) de la pièce (63) d'extrémité de l'arbre (46) de contact auxiliaire sont prévus de manière que les évidements (62,65) soient alignés entre eux suivant l'axe dans la position de sectionnement du support (3) d'appareils.

4. Support d'appareils suivant la revendication 3,
caractérisé en ce qu'il est prévu des clés (70;75) de commande distinctes pour amener le support (3) d'appareils à une position d'examen ou à une position de fonctionnement, la clé (70) de commande pour la position d'examen comprenant un panneton court suivant l'axe pour actionner seulement l'arbre (46) de contact auxiliaire et la clé (75) de commande comprenant, pour la position de fonctionnement, un panneton (77) plus long suivant l'axe pour actionner en même temps l'arbre (46) de contact auxiliaire et l'arbre (40) de contact principal.

5. Support d'appareils suivant la revendication 4,
caractérisé en ce que les deux clés de commande sont reliées par une pièce (81) de prise à peu près médiane en une clé double (80).

6. Support d'appareils suivant l'une des revendications précédentes,
caractérisé en ce que l'arbre (40) de contact principal et l'arbre (46) de contact auxiliaire sont reliés par un accouplement de roue libre, de manière qu'en partant de la position de fonctionnement, seuls les deux arbres (40,46) puissent être actionnés, lors de l'utilisation de la clé (70) de commande pour la position d'examen, en commun par poussée à la fois des blocs (30,31) de contacts de sectionnement principaux et du bloc (32) de contacts de sectionnement auxiliaires dans la position d'ouverture, l'accouplement de roue libre ayant un évidement (82) supplémentaire en arc de l'arbre (46) de contact auxiliaire et un tourillon (83) d'entraînement, plongeant dans l'évidement (82) en arc, de l'arbre (40) de contact principal.

7. Support d'appareils suivant l'une des revendications précédentes,
caractérisé en ce qu'il est prévu devant les pièces (60,63) d'extrémité de l'arbre (40) de contact principal et de l'arbre (46) de contact auxiliaire un trou (67) de serrure ne permettant le passage des pannetons (72,77) des clés (70;75; 80) de commande que dans les positions d'extrémité des deux arbres (40,46).

8. Support d'appareils suivant l'une des revendications précédentes,
caractérisé en ce que l'arbre (46) de contact auxiliaire porte un collet (66) de blocage pour le verrouillage d'une porte (6) prévue pour l'accès au support (3) d'appareils.

9. Support d'appareils suivant l'une des revendications précédentes,
caractérisé en ce que l'arbre (40) de contact principal et l'arbre (46) de contact auxiliaire ont chacun sur leur périphérie un évidement (91,92), les deux évidements (91,92) étant en correspondance dans la position de sectionnement du support (3) d'appareils et un coulisseau (93) guidé transversalement à l'axe longitudinal des deux arbres (40,44) et pouvant coulisser comporte un ergot (94) de commande plongeant dans les évidements (91,92), de manière que le coulisseau (93) puisse bouger à l'encontre d'une force de rappel par rotation de l'arbre (40) de contact principal et/ou de l'arbre (46) de contact auxiliaire dans une position (0, I, II) univoque d'indication.
